# EUROPÄISCHE PATENTSCHRIFT

(11) **EP 1 531 173 B1**
(45) Veröffentlichungstag und Bekanntmachung des Hinweises auf die Patenterteilung: **29.02.2012**
(21) Anmeldenummer: 04025732.1
(22) Anmeldetag: 29.10.2004
(51) Int. Cl.: C09D 175/04, C08G 18/44, B32B 27/08

(54) **Kunststoffverbundelemente und ein Verfahren zu ihrer Herstellung**
Plastic composite elements and process for the production thereof
Eléments composites en matière plastique et procédé de fabrication

(30) Priorität: 13.11.2003 DE 10352951
(43) Veröffentlichungstag der Anmeldung: 18.05.2005
(73) Patentinhaber: Bayer MaterialScience AG, 51368 Leverkusen (DE)
(72) Erfinder: Haas, Peter, Dr., 42781 Haan (DE); Roers, Rolf, Dr., 46399 Bocholt (DE); Grammes, Hartwig, 51375 Leverkusen (DE)

(56) Entgegenhaltungen:
- EP-A- 0 512 524
- EP-A- 0 669 352
- EP-A- 1 323 859

## Beschreibung

Die Erfindung betrifft Verbundelemente enthaltend als Schicht
i) einen thermoplastischen Kunststoff, an den sich haftend als Schicht
ii) das Produkt der Umsetzung einer Reaktionsmischung bestehend aus
   a) ein Isocyanatgruppen-aufweisendes Prepolymer erhältlich aus der Umsetzung mindestens eines Isocyanats und eines Polycarbonatpolyalkohols mit einer Funktionalität von 2 bis 3 und einer Hydroxylzahl von 40 bis 400 mg KOH/g basierend auf der Kondensation von Kohlensäureestem mit Diolen und/oder Triolen mit einem Molekulargewicht von 62 bis 3000 g/mol, wobei das Prepolymer einen Isocyanatgruppengehalt von 20 bis 30% aufweist,
   b) gegenüber Isocyanaten reaktive Verbindungen und
   c) Katalysatoren
   d) Treibmittel und
   e) Zellreglern und gegenbenenfalls
   f) Füllstoffen, Fasern, oberflächenaktiven Verbindungen und/oder Stabilisatoren gegen Oxidation, thermischen oder mikrobiellen Abbau oder Alterung
anschließt.

Des Weiteren bezieht sich die Erfindung auf ein Verfahren zur Herstellung derartiger Verbundelemente und deren Verwendung.

Polyisocyanat-Polyadditionsprodukte erhältlich durch Umsetzung von Isocyanaten mit gegenüber Isocyanaten reaktiven Verbindungen, beispielsweise Polyolen, d.h. Verbindungen, die mindestens zwei Hydroxylgruppen aufweisen, sowie Verbundelemente von diesen Produkten mit weiteren Kunststoffen sind allgemein bekannt. Eine Belastung dieser Verbundelemente durch hohe Temperaturen und Luftfeuchtigkeiten führt häufig zu einer unerwünschten Ablösung der Kunststoffe von den Polyisocyanat-Polyadditionsprodukten. Insbesondere beim Einsatz solcher Verbundelemente im Automobilbau, für die eine solche Belastung nicht ausgeschlossen werden kann, ist eine Ablösung der Polyisocyanat-Polyadditionsprodukte von den weiteren Kunststoffen und damit eine Zerstörung des Verbundelementes nicht akzeptabel.

Bei der Herstellung der Verbundelemente und insbesondere der Polyisocyanat-Polyadditionsprodukte kann sich das Problem ergeben, dass die Ausgangskomponenten, insbesondere die Polyolkomponente, die die gegenüber Isocyanaten reaktiven Ausgangsstoffe beinhaltet, keine stabile Mischungen ergeben. Gerade bei niedrigen Temperaturen, beispielsweise unterhalb von 20°C, können einzelne Polyole dazu neigen, in der Polyolkomponente auszuflocken oder sich in der Polyolkomponente abzusetzen. Gerade zur reproduzierbaren Herstellung qualitativ hochwertiger Produkt gilt es, dieses Problem zu vermeiden.

DE-A 10 022 280 beschreibt ein Verfahren zur Herstellung von Verbundelementen mit verbesserter Haftung sowie Feuchtalterungseigenschaften solcher Verbundwerkstoffe aus Thermoplasten und Polyurethanen. Der Verbund wird beispielsweise zur Herstellung von Armaturentafeln verwendet, wobei diese Tafeln üblicherweise aus beispielsweise einem Thermoplastträger, einen PUR-Schaum sowie einer weiteren Deckschicht aus beispielsweise PVC, TPO, ABS, thermoplastischen Polyurethanen, Polyurethansprühhäuten u.a. aufgebaut sind.

Durch die Verwendung von Estergruppen enthaltenden Isocyanatprepolymeren zur Herstellung von Polyurethanschaumstoffen gemäß DE-A 10 022 280 werden verbesserte Eigenschaften, insbesondere eine gute Haftung zwischen dem Thermoplasten und derartigen Polyurethanschaumstoffen erhalten. Bei einer Feuchtlagerung eines solchen Verbundes bis 80 Stunden bei 80°C und 80 % relativer Luftfeuchte liegt ein intakter Verbund aus Thermoplast und Polyurethanschaum vor. Danach löst sich der Verbund.

Aufgabe der Erfindung war es somit, Verbundelemente zu entwickeln, die aufgrund ihrer hervorragenden mechanischen Eigenschaften beispielsweise im Automobilbau eingesetzt werden können und bei denen die Haftung zwischen dem Kunststoff und den daran haftenden Polyisocyanat-Polyadditionsprodukten auch bei einer Langzeitlagerung (> 4 Tage) bei 80°C und 80 % rel. Luftfeuchtigkeit nicht verloren geht. Insbesondere sollten die Verbundelemente mit Ausgangskomponenten herstellbar sein, die stabile Mischungen ergeben und somit einfach und reproduzierbar eingesetzt werden können. Dabei sollten sich insbesondere die gegenüber Isocyanaten reaktiven Verbindungen in der Polyolkomponente und/oder der Isocyanatkomponente nicht absetzen oder ausflocken.

Durch die Verwendung von Kohlensäureestergruppen enthaltenden Isocyanatprepolymeren zur Herstellung von Polyurethanschaumstoffen wird die Haftung zwischen PUR-Schaum und Thermoplast verbessert, und zwar auch unter den drastischen Bedingungen einer Feuchtlagerung bei langer Belastungsdauer. Dies ist umso überraschender, als Kohlensäureestergruppen als äußerst hydrolyseempfindlich gelten.

Gegenstand der Erfindung sind daher Verbundelemente enthaltend als Schicht
i) einen thermoplastischen Kunststoff, an den sich haftend als Schicht
ii) das Produkt der Umsetzung einer Reaktionsmischung bestehend aus
   a) ein Isocyanatgruppen-aufweisendes Prepolymer erhältlich aus der Umsetzung mindestens eines Isocyanats und eines Polycarbonatpolyalkohols mit einer Funktionalität von 2 bis 3 und einer Hydroxylzahl von 40 bis 400 mg KOH/g basierend auf der Kondensation von Kohlensäureestern mit Diolen und/oder Triolen mit einem Molekulargewicht von 62 bis 3000 g/mol, wobei das Prepolymer einen Isocyanatgruppengehalt von 20 bis 30% aufweist,
   b) gegenüber Isocyanaten reaktive Verbindungen und
   c) Katalysatoren
   d) Treibmittel und
   e) Zellreglern und gegenbenenfalls
   f) Füllstoffen, Fasern, oberflächenaktiven Verbindungen und/oder Stabilisatoren gegen Oxidation, thermischen oder mikrobiellen Abbau oder Alterung
anschließt.

Die erfindungsgemäßen Verbundelemente können als thermoplastischen Kunststoff (i) übliche thermoplastische Kunststoffe enthalten, beispielsweise Polyphenylenoxid (PPO), Polyvinylchlorid (PVC), Acrylnitril-Butadien-Styrol-Acrylester (ASA), Polycarbonat (PC), thermoplastisches Polyurethan (TPU), Polyethylen, Polypropylen.

Bevorzugt enthalten die Verbundelemente als (i) thermoplastische Polyolefin-Folie (TPO) wie Polyethylen und/oder Polypropylen, Polyvinylchlorid (PVC), Styrolmaleinsäureanhydrid (SMA) und/oder ein Polycarbonat/Styrol-Acrylnitril/Acrylnitril-Butadien Blend (PC/ABS).

Die Kunststoffe (i) können in Form üblicher Materialien zur Herstellung der Verbundelemente eingesetzt werden, beispielsweise als Folien, im Allgemeinen mit einer Dicke von 0,2 bis 2 mm.

Derartige Folien sind kommerziell erhältlich, und ihre Herstellung in allgemein bekannt. Die Folien weisen bevorzugt eine Dicke von 0,2 bis 2 mm auf. Als (i) können auch mindestens zwei Schichten enthaltene Folien eingesetzt werden, wobei beispielsweise die eine Schicht einen ASA und/oder Polycarbonat-Werkstoff enthält.

Die Kunststoffe (i) aus Styrolmaleinsäureanhydrid (SMA) und/oder ein Polycarbonat/Styrol-Acrylnitril/Acrylnitril-Butadien Blend (PC/ABS) können in Form üblicher Materialien zur Herstellung der Verbundelemente eingesetzt werden, beispielsweise als Versteifungsteil für Instrumenten-Tafeln oder Türseitenteile.

Erfindungsgemäß schließen sich an den Kunststoff (i) haftend die Polyisocyanat-Polyadditionsprodukte (ii) an, beispielsweise Polyurethane, die gegebenenfalls Isocyanurat- und/oder Hamstoffstrukturen aufweisen können. Die Herstellung dieser Polyisocyanat-Polyadditionsprodukte (ii), bevorzugt der Polyurethane, die in kompakter oder bevorzugt zelliger Form, beispielsweise als Weichschaumstoff, Halbhartschaumstoff oder Hartschaumstoff, besonders bevorzugt als Halbhartschaumstoff vorliegen können, erfolgt erfindungsgemäß durch die nachfolgend dargestellte Umsetzung.

Zur Erzielung der verbesserten Haftung zwischen (i) und (ii) insbesondere unter feucht-warmen Bedingungen sowie zur Herstellung stabiler Ausgangskomponenten, wird als erfindungswesentliches Merkmal mindestens ein Polycarbonatpolyalkohol mit einer Funktionalität von 2 bis 3, bevorzugt 2 und einer Hydroxylzahl von 40 bis 400, bevorzugt 40 bis 100, besonders bevorzugt 40 bis 80 mg KOH/g basierend auf der Kondensation von Kohlensäureestern mit Diolen und/oder Triolen mit einem Molekulargewicht von 62 bis 3000 g/mol in Form eines Isocyanatgruppen-aufweisenden Prepolymers in der Komponente (a) zur Herstellung der Polyisocyanat-Polyadditionsprodukte (ii) eingesetzt. Als Diol und/oder Triol können beispielsweise Trimethylolpropan, Neopentylglykol, Polytetrahydrofuran (PTHF), aliphatische Diole mit 2 bis 12 Kohlenstoffatomen, z.B. Ethylenglykol, Propan-1,3-diol, Pentan-1,5-diol, Pentan-1,5-diol, Hexan-1,6-diol, Butan-1,4-diol, Etherdiole und/oder Ethertriole auf Basis von Ethylenoxid und/oder Propylenoxid, z.B. Diethylenglykol, Dipropylenglykol, Triethylenglykol, Tripropylenglykol, Tetraethylenglykol, Tetrapropylenglykol eingesetzt werden. Bevorzugt basiert der Polyesterpolyolalkohol auf Hexan-1,6-diol, Butan-1,4-diol und/oder Monoethylenglykol als Alkoholkomponente.

Dieser Polycarbonatpolyalkohol wird erfindungsgemäß mit mindestens einem Isocyanat, das an späterer Stelle beispielhaft beschrieben wird, zu einem Isocyanatgruppen-aufweisenden Prepolymer umgesetzt, wobei das Prepolymer einen Isocyanatgruppengehalt von 20 bis 30 % aufweist. Der Isocyanatgruppengehalt hat die Einheit % und wird bestimmt gemäß der Norm ASTM D 1638. Der erfindungsgemäße Isocyanatgehalt des Prepolymers wird nach dem Fachmann allgemein bekannten Verfahren erhalten, beispielsweise dadurch, indem man das Polycarbonatpolyol und das Isocyanat in einem Massen-Verhältnis von 0,01:1 bis 0,1:1 umsetzt. Die Umsetzung kann bei einer Temperatur von 30 bis 120°C beispielsweise unter Rühren üblicherweise für eine Dauer von 10 bis 180 min gegebenenfalls in Gegenwart bekannter Katalysatoren in allgemein bekannten Behältern, Apparaturen oder Reaktoren erfolgen.

Die Herstellung der erfindungsgemäßen Verbundelemente kann derart erfolgen, dass man
a) ein Isocyanatgruppen-aufweisendes Prepolymer erhältlich aus der Umsetzung mindestens eines Isocyanats und eines Polycarbonatpolyalkohols mit einer Funktionalität von 2 bis 3 und einer Hydroxylzahl von 40 bis 400 mg KOH/g basierend auf der Kondensation von Kohlensäureestern mit Diolen und/oder Triolen mit einem Molekulargewicht von 62 bis 3000 g/mol, wobei das Prepolymer einen Isocyanatgruppengehalt von 5 bis 48 % aufweist,
b) gegenüber Isocyanaten reaktive Verbindungen, sowie gegebenenfalls
c) Katalysatoren,
d) Treibmittel und/oder
e) Hilfs- und/oder Zusatzstoffe
in Gegenwart von (i) umsetzt.

Zur Herstellung der erfindungsgemäßen Produkte können das Prepolymer (a) und die gegenüber Isocyanaten reaktiven Verbindungen (b) und gegebenenfalls (d) in solchen Mengen zur Umsetzung gebracht werden, dass das Äquivalenzverhältnis von NCO-Gruppen von (a) zur Summe der reaktiven Wasserstoffatome von (b) und gegebenenfalls (d) bevorzugt 0,3 bis 1,8:1, besonders bevorzugt 0,4 bis 1,0:1 und insbesondere 0,4 bis 0,6: 1, beträgt. Falls das Produkt (ii) zumindest teilweise Isocyanuratgruppen gebunden enthält, wird üblicherweise ein Verhältnis von NCO-Gruppen zur Summe der reaktiven Wasserstoffatome von 1,5 bis 60:1, vorzugsweise 1,5 bis 8:1, angewandt.

Die Umsetzung zum Produkt kann beispielsweise durch Handguss, durch Hochdruck- oder Niederdruckmaschinen, oder durch RIM-Verfahren (reaction-injection-molding) üblicherweise in offenen oder bevorzugt geschlossenen Formwerkzeugen durchgeführt werden. Geeignete Verarbeitungsmaschinen sind handelsüblich erhältlich (z.B. von Fa. Elastogran, Isotherm, Hennecke, Kraus Maffei u.a.).

Zur Herstellung von kompakten Produkten als (ii) hat es sich als vorteilhaft erwiesen, wenn die Komponenten zur Herstellung von kompakten Polyisocyanat-Polyadditionsprodukte vor der Verarbeitung durch Anlegen von Vakuum entgast werden, um blasenfreie Formteile zu erhalten. Bei der Verarbeitung mit Polyurethan(PU)-Maschinen ist es auch vorteilhaft, wenn während der Verarbeitung die Vorlagebehälter unter vermindertem Druck stehen.

Die Ausgangskomponenten werden üblicherweise in Abhängigkeit von Anwendungsfall bei einer Temperatur von 0 bis 100°C, vorzugsweise von 20 bis 80°C, gemischt und beispielsweise in das Formwerkzeug eingebracht. Die Vermischung kann, wie bereits dargelegt wurde, mechanisch mittels eines Rührers oder einer Rührschnecke durchgeführt werden, oder kann in einem üblichen Hochdruckmischkopf erfolgen.

Die Umsetzung des Reaktionsgemisches kann beispielsweise in üblichen, bevorzugt temperierbaren und verschließbaren Formen durchgeführt werden. Insbesondere bei der Herstellung von möglichst glatten Produkten werden als Formwerkzeuge bevorzugt solche verwendet, deren Oberfläche möglichst glatt oder definiert ornamentiert ist und bevorzugt keine Unebenheiten, Risse, Kratzer oder Verunreinigungen aufweist. Die Oberfläche der Form kann beispielsweise durch Polieren behandelt werden.

Als Formwerkzeuge zur Herstellung der Produkte können übliche und kommerziell erhältliche Werkzeuge eingesetzt werden, deren Oberfläche beispielsweise aus Stahl, Aluminium, Email, Teflon, Epoxyharz oder einem anderen polymeren Werkstoff besteht, wobei die Oberfläche gegebenenfalls verchromt, beispielsweise hartverchromt sein kann. Bevorzugt sollten die Formwerkzeuge temperierbar sein, um die bevorzugten Temperaturen einstellen zu können, verschließbar und bevorzugt zur Ausübung eines Druckes auf das Produkt ausgerüstet sein.

Die Umsetzung zu den Polyisocyanat-Polyadditionsprodukten erfolgt üblicherweise bei einer Formtemperatur, bevorzugt auch einer Temperatur der Ausgangskomponenten, von 20 bis 120°C, bevorzugt 30 bis100°C, besonders bevorzugt 35 bis 80°C, für eine Dauer von üblicherweise 0,5 bis 30 min, bevorzugt 1 bis 5 min. Die Umsetzung in Formwerkzeug erfolgt erfindungsgemäß in direktem Kontakt mit (i). Dies kann beispielsweise dadurch erreicht werden, dass man (i) vor der Umsetzung, wenn es sich bei (i) um eine Folie handelt, bevorzugt frei von Falten, in der Form plaziert und anschließend wie bereits beschrieben die Reaktionsmischung auf (i) füllt und anschließend bevorzugt die Form verschließt. Fasern als Komponente (e) können sowohl enthaltend in dem Reaktionsgemisch eingesetzt werden, als auch in Form von Matten oder Geweben. Werden Matten oder Gewebe als Komponente (e) eingesetzt, so können diese beispielsweise vor dem Einfüllen der Reaktionsmischung in die Form auf (i) plaziert werden und anschließend das Reaktionsgemisch, das in diesem Fall keine Fasern (e) zusätzlich zu den Matten oder Geweben enthaltend muss, in die Form eingefüllt werden.

Als Isocyanate können allgemein bekannte (cyclo)aliphatische und/oder insbesondere aromatische Polyisocyanate, bevorzugt Diisocyanate eingesetzt werden. Zur Herstellung der erfindungsgemäßen Verbundelemente eignen sich besonders aromatische Diisocyanate, vorzugsweise Diphenylmethandiisocyanat (MDI) und Toluylendiisocyanat (TDI).

Als Komponente (b) können allgemein bekannte gegenüber Isocyanaten reaktive Verbindungen eingesetzt werden, beispielsweise Polyetherpolyalkohole, Polyesterpolyalkohole und/oder Polycarbonatdiole, bevorzugt Polyetherpolyole und/oder Polyesterpolyalkohole, beispielsweise die eingangs zur Herstellung von (b) beschriebenen Polyesterpolyalkohole, üblicherweise mit einem Molekulargewicht von 500 bis 10000, insbesondere 1000 bis 6000 und bevorzugt mit einer Funktionalität gegenüber Isocyanatgruppen von 2 bis 6. Des Weiteren können die erfindungsgemäßen Verbindungen (b) in Mischung mit Kettenverlängerungs- und/oder Vernetzungsmitteln verwendet werden. Bei den Kettenverlängerungsmitteln handelt es sich überwiegend um 2-funktionelle Alkohole mit Moleklargewichten von 60 bis 499, beispielsweise Ethylenglykol, Propylenglykol, Butandiol-1,4, Pentandiol-1,5. Bei den Vernetzungsmitteln handelt es sich um Verbindungen mit Molekulargewichten von 60 bis 499 und 3 oder mehr aktiven H-Atomen, vorzugsweise Aminen und besonders bevorzugt Alkoholen, beispielsweise Glyzerin, Trimethyolpropan und/oder Pentaerythrit.

Als Katalysatoren (c) können übliche Verbindungen eingesetzt werden, die beispielsweise die Reaktion der Komponente (a) mit der Komponente (b) stark beschleunigen. In Frage kommen beispielsweise allgemein für diesen Zweck bekannte tertiäre Amine und/oder organische Metallverbindungen, insbesondere Zinnverbindungen. Bevorzugt werden als Katalysatoren solche eingesetzt, die zu einem möglichst geringen Fogging, d.h. zu einer möglichst geringen Abgabe von flüchtigen Verbindungen aus dem Umsetzungsprodukt (ii) führen, beispielsweise Kaliumacetat und/oder Li-Salze und/oder tertiäre Amine mit mindestens einer funktionellen Hydroxyl-Gruppe.

Als Treibmittel (d) können zur Herstellung von geschäumten Produkten (ii), beispielsweise Polyurethan-weich-, halbhart- oder Hartschaumstoffen, die gegebenenfalls Harnstoff und/oder Isocyanuratstrukturen aufweisen können allgemein bekannte chemisch oder physikalisch wirkende Verbindungen eingesetzt werden. Als chemisch wirkendes Treibmittel kann bevorzugt Wasser eingesetzt werden, welches durch Reaktion mit den Isocyanatgruppen Kohlendioxid bildet. Beispiele für physikalische Treibmittel, d.h. solche, inerte Verbindungen, die unter den Bedingungen der Polyurethanbildung verdampfen, sind beispielsweise (cyclo)aliphatische Kohlenwasserstoffe, vorzugsweise solche mit 4 bis 8, besonders bevorzugt 4 bis 6 und insbesondere 5 Kohlenstoffatomen, teilhalogenierte Kohlenwasserstoffe oder Ether, Ketone oder Acetate. Die Menge der eingesetzten Treibmittel richtet sich nach der angestrebten Dichte der Schaumstoffe. Die unterschiedlichen Treibmittel können einzeln oder in beliebigen Mischungen untereinander zum Einsatz kommen.

Die Umsetzung erfolgt gegebenenfalls in Anwesenheit von (e) Hilfs- und/oder Zusatzstoffen, wie z.B. Füllstoffen, Fasern, z.B. in Form von Geweben und/oder Matten, Zellreglern, oberflächenaktiven Verbindungen und/oder Stabilisatoren gegen Oxidativen, thermischen oder mikrobiellen Abbau oder Alterung.

Die erfindungsgemäßen Verbundelemente weisen durch die Verwendung der eingangs beschriebenen Polycarbonatpolyalkohole eine deutlich verbesserte Haftung zwischen (i) und (ii) auf, d.h. eine Haftung zum thermoplastischen Trägermaterial, insbesondere zu PC/ABS und SMA auf. Diese verbesserte Haftung gewährleistet, dass bei Abreißen des Schaums von dem Träger der Schaum ganzflächig auf dem Träger verbleibt. Erfindungsgemäß konnte somit durch die Verwendung der erfindungsgemäßen Polycarbonatpolyalkohole erreicht werden, dass die Haftung zwischen (i) und (ii) bei Messung gemäß DIN 53 289 oder 53 530 im Anfangszustand sowie nach Wärme- und Feuchtwärmelagerung eine Abschälkraft von ≥ 2,5 N/cm erreicht. Dies gilt insbesondere nach längerer Feuchtalterung.

Die erfindungsgemäßen Verbundelemente werden bevorzugt als Bauteile im Fahrzeug-, Flugzeugoder Immobilienbau eingesetzt, beispielsweise als Armaturenbretter, Türverkleidungen, Hutablagen, Konsolen, Armauflagen oder Türspiegel.

Durch den Einsatz der Polycarbonatpolyalkohole in Form von Prepolymeren wird erreicht, dass die Polycarbonatpolyalkohole in der Isocyanatkomponente stabil integriert werden. Ein Ausflocken oder Absetzen der Polycarbonatpolyalkohole beispielsweise in der Polyolkomponente kann somit erfolgreich vermieden werden.

Erfindungswesentlich ist somit der Einsatz von Prepolymeren erhältlich aus der Umsetzung mindestens eines Isocyanats und eines Polycarbonatpolyalkohols mit einer Funktionalität von 2 bis 3 und einer Hydroxylzahl von 40 bis 400 mg KOH/g basierend auf der Kondensation von Kohlensäureestem mit Diolen und/oder Triolen mit einem Molekulargewicht von 62 bis 3000 g/mol, wobei das Prepolymer einen Isocyanatgruppengehalt von 5 bis 48 % aufweist, zur Herstellung von stabilen Polyurethansystemen, insbesondere Isocyanatkomponenten enthaltend Polycarbonatpolyalkohole.

Die Erfindung soll anhand der nachfolgenden Beispiele näher erläutert werden.

### Beispiele

### Beschreibung der Ausgangsstoffe

- Polyol 1:: Polyetherpolyol mit einer OH-Zahl von 28 und mindestens 80 % primären OH-Gruppen, hergestellt durch Addition von Propylenoxid/Ethylenoxid (83/17) an Trimethylolpropan als Starter.
- Polyol 2:: Polyetherpolyol mit einer OH-Zahl von 28 und mindestens 80 % primären OH-Gruppen, hergestellt durch Addition von Propylen/Ethylenoxid (83/17) an Grimethylolpropan als Starter und mit einem gepfropften Füllstoffgehalt von 20 Gew.-% aus Styrol/Acrylnitril (40 %/60 %).
- Polyol 3:: Polyetherpolyol mit einer OH-Zahl von 500, hergestellt durch Addition von Propylenoxid an Triethanolamin als Starter.

### Polyisocyanat 1:

Polyisocyanat der Diphenylmethanreihe, das durch Phosgenierung eines Anilin/Formaldehydkondensats erhalten wurde, mit einem Isocyanatgehalt von 31,5 Gew.-% und einer Viskosität von 200 mPa.s bei 25°C.

### Herstellung des Polyisocyanatprepolymers 1 (erfindungsgemäß):

900 g Polyisocyanat 1 wurden mit 100 g eines Polycarbonathexandiols (Desmophen® 2020 der Bayer AG) der OH-Zahl 56 für 2 Stunden bei 95°C erhitzt.
NCO-Gehalt: 28 %
Viskosität: 1250 mPa.s bei 25°C.

### Herstellung des Polyisocyanatprepolymers 2 (Vergleich)

900 g Polyisocyanat 1 wurden mit 100 g des Polyesterpolyalkohols aus DE-A 10 022 280 (Seite 3, Zeile 15) aus Adipinsäure und Ethylenglykol der OH-Zahl 56 zur Reaktion gebracht.
NCO-Gehalt: 28 %

### Verschäumungsbeispiele

Mit den in der Tabelle 1 angegebenen Formulierungen wurden Polyurethan-Formschäume hergestellt. Dazu wurden Polyol, Wasser und Aktivator vorgemischt. Dann wurde das Isocyanat zugesetzt, die Reaktionsmischung 10 Sekunden bei 1200 Upm homogenisiert und dann in eine Plattenform mit einer Temperatur von 40°C (Größe 200*200*20 mm) gegossen, auf deren Boden zuvor eine 104 x 150 mm große Thermospritzgussplatte vom Typ Blendur® T65 auf Polycarbonat / ABS-Basis der Bayer AG mit einer Dicke von 3 mm mittig fixiert worden war.

| **Beispiel** | **1*** | **2** | **3*** |
|---|---|---|---|
| Polyol 1 | 70,7 | 70,7 | 70,7 |
| Polyol 2 | 23,0 | 23,0 | 23,0 |
| Polyol 3 | 5,5 | 5,5 | 5,5 |
| Wasser | 2,8 | 2,8 | 2,8 |
| Dimethylaminopropylhamstoff | 0,6 | 0,6 | 0,6 |
| Polyisocyanat 1 | 50 | 33,3 | 33,5 |
| Prepolymer 1 | - | 19,5 | - |
| Prepolymer 2 | - | - | 19,5 |
| Startzeit [s] | 18 | 18 | 18 |
| Steigzeit [s] | 97 | 97 | 97 |
| Rohdichte [kg/m³] | 62 | 62 | 62 |

| | | | |
|---|---|---|---|
| *nicht erfindungsgemäßes Vergleichsbeispiel | | | |

- Mischungsverhältnis:: 100 Gew.-Teile Polyolformulierung (Polyole,Wasser, Dimethylaminopropylharnstoff) auf die in der Tabelle angegebene Isocyanatmenge.

Die Mengenangaben in der Tabelle sind Gew.-Teile.

### Untersuchung der Haftung zwischen Schaumstoff und Thermoplast

Der Schaumstoff auf der hinterschäumten Thermoplastplatte wird in 15 mm Abstand vom Rand mit einem Messer bis zum Träger angeschnitten.

In Beispiel 1 ist der Schaumstoff ohne Rückstände von der Platte entfernbar.

In Beispiel 2 verbleibt ganzflächig ein intakter Schaumstoffbelag auf der Thermoplastträgerplatte. In Beispiel 3 verbleibt ganzflächig ein intakter Schaumstoffbelag auf der Thermoplastträgerplatte.

Zur Bestimmung des Feuchtalterungsverhalten der Haftung werden die Proben bei einer Temperatur von 80°C bei einer relativen Luftfeuchte von ca. 80 % gelagert.

### Haftung nach Feuchtalterung:

### Beispiel 2:

Nach 80 h liegt eine intakte Schaumstoffschicht auf dem Träger* vor.
Nach 100 h liegt eine intakte Schaumstoffschicht auf dem Träger* vor.
Nach 120 h liegt eine intakte Schaumstoffschicht auf dem Träger* vor.
* jeweils nach Abriss eines 15 mm dicken Schaumstoffabschnitts

Der Versuch wurde nach 135 h mit gleichen Ergebnissen nicht weitergeführt.

### Haftung nach Feuchtalterung:

### Beispiel 3:

Nach 80 h liegt eine intakte Schaumstoffschicht auf dem Träger* vor.
Nach 100 h liegt noch 50 % Schaum auf dem Träger* vor.
Nach 120 h liegt noch 20 % Schaum auf dem Träger* vor.

### Beispiel 1:

Bei Beispiel 1 wurde auf den Feuchtalterungstest verzichtet, da bereits vor der Feuchtalterung keine Schaumhaftung auf dem Träger vorlag.

Die erfindungsgemäßen Verbundelemente zeigen gegenüber den bekannten Verbundelementen deutliche Verbesserungen bei der Feuchtlagerung.

## Patentansprüche

1. Verbundelemente enthaltend als Schicht
i) mindestens einen thermoplastischen Kunststoff, an den sich haftend als Schicht
ii) das Produkt der Umsetzung einer Reaktionsmischung bestehend aus
a) einem Isocyanatgruppen-aufweisenden Prepolymer erhältlich aus einer Mischung bestehend aus mindestens einem Isocyanat und mindestens einem Polycarbonatpolyalkohol mit einer Funktionalität von 2 bis 3 und einer Hydroxylzahl von 40 bis 400 mg KOH/g basierend auf der Kondensation von Kohlensäureestern mit Diolen und/oder Triolen mit einem Molekulargewicht von 62 bis 3000 g/mol, wobei das Prepolymer einen Isocyanatgruppengehalt von 20 bis 30 % aufweist,
b) gegenüber Isocyanaten reaktiven Verbindungen und
c) Katalysatoren sowie
d) Treibmitteln und
e) Zellreglern und gegebenenfalls
f) Füllstoffen, Fasern, oberflächenaktiven Verbindungen und/oder Stabilisatoren gegen Oxidation, thermischen oder mikrobiellen Abbau oder Alterung
anschließt.

2. Verfahren zur Herstellung von Verbundelementen enthaltend (i) mindestens einen thermoplastischen Kunststoff und daran haftend Polyisocyanat-Polyadditionsprodukte, **dadurch gekennzeichnet, dass** man
a) ein Isocyanatgruppen-aufweisendes Prepolymer erhältlich aus einer Mischung bestehend aus mindestens einem Isocyanat und mindestens einem Polycarbonatpolyalkohol mit einer Funktionalität von 2 bis 3 und einer Hydroxylzahl von 40 bis 400 mg KOH/g basierend auf der Kondensation von Kohlensäureestern mit Diolen und/oder Triolen mit einem Molekulargewicht von 62 bis 3000 g/mol, wobei das Prepolymer einen Isocyanatgruppengehalt von 20 bis 30 % aufweist,
b) gegenüber Isocyanaten reaktive Verbindungen sowie
c) Katalysatoren und
d) Treibmittel und
e) Zellregler und gegebenenfalls
f) Füllstoffen, Fasern, oberflächenaktive Verbindungen und/oder Stabilisatoren gegen Oxidation, thermischen oder mikrobiellen Abbau oder Alterung
in Gegenwart von (i) umsetzt.

3. Verwendung der Verbundelemente gemäß Anspruch 1 zur Herstellung von Bauteilen im Fahrzeug-, Flugzeug- und Immobilienbau.

## Claims

1. Composite elements containing as a layer
i) at least one thermoplastic polymer adjoined by, adhering as a layer,
ii) the product of the reaction of a reaction mixture consisting of
a) a prepolymer which has isocyanate groups and can be obtained from a mixture consisting of at least one isocyanate and at least one polycarbonate polyalcohol having a functionality of from 2 to 3 and a hydroxyl number of from 40 to 400 mg KOH/g based on the condensation of carboxylic esters with diols and/or triols having a molecular weight of from 62 to 300 g/mol, where the prepolymer has an isocyanate group content of from 20 to 30%,
b) compounds which are reactive toward isocyanates and
c) catalysts and also
d) blowing agents and
e) cell regulators and optionally
f) fillers, fibres, surface-active compounds and/or stabilizers against oxidation, thermal or microbial degradation or ageing.

2. Process for producing composite elements containing (i) at least one thermoplastic polymer and polyisocyanate polyaddition products adhering thereto, **characterized in that**
a) a prepolymer which has isocyanate groups and can be obtained from a mixture consisting of at least one isocyanate and at least one polycarbonate polyalcohol having a functionality of from 2 to 3 and a hydroxyl number of from 40 to 400 mg KOH/g based on the condensation of carboxylic esters with diols and/or triols having a molecular weight of from 62 to 3000 g/mol, where the prepolymer has an isocyanate group content of from 20 to 30%,
b) compounds which are reactive toward isocyanates and
c) catalysts and
d) blowing agents and
e) cell regulators and optionally
f) fillers, fibres, surface-active compounds and/or stabilizers against oxidation, thermal or microbial degradation or ageing
are reacted in the presence of (i).

3. Use of the composite elements according to Claim 1 for producing components in vehicle, aircraft and building construction.

## Revendications

1. Éléments composites contenant en tant que couche
i) au moins un plastique thermoplastique, sur lequel adhère en tant que couche
ii) le produit de la réaction d'un mélange réactionnel constitué par
a) un prépolymère comprenant des groupes isocyanate pouvant être obtenu à partir d'un mélange constitué par au moins un isocyanate et au moins un polycarbonate-polyalcool d'une fonctionnalité de 2 à 3 et d'un indice hydroxyle de 40 à 400 mg KOH/g fondé sur la condensation d'esters de l'acide carbonique avec des diols et/ou des triols d'un poids moléculaire de 62 à 3 000 g/mol, le prépolymère présentant une teneur en groupes isocyanate de 20 à 30 %,
b) des composés réactifs avec les isocyanates, et
c) des catalyseurs, ainsi que
d) des agents gonflants, et
e) des régulateurs cellulaires et éventuellement
f) des charges, des fibres, des composés tensioactifs et/ou des stabilisateurs contre l'oxydation, la décomposition thermique ou microbienne ou le vieillissement.

2. Procédé de fabrication d'éléments composites contenant (i) au moins un plastique thermoplastique et, adhérant sur celui-ci, des produits de polyaddition de polyisocyanate, **caractérisé en ce que**
a) un prépolymère comprenant des groupes isocyanate pouvant être obtenu à partir d'un mélange constitué par au moins un isocyanate et au moins un polycarbonate-polyalcool d'une fonctionnalité de 2 à 3 et d'un indice hydroxyle de 40 à 400 mg KOH/g fondé sur la condensation d'esters de l'acide carbonique avec des diols et/ou des triols d'un poids moléculaire de 62 à 3 000 g/mol, le prépolymère présentant une teneur en groupes isocyanate de 20 à 30 %,
b) des composés réactifs avec les isocyanates, et
c) des catalyseurs, ainsi que
d) des agents gonflants, et
e) des régulateurs cellulaires et éventuellement
f) des charges, des fibres, des composés tensioactifs et/ou des stabilisateurs contre l'oxydation, la décomposition thermique ou microbienne ou le vieillissement
sont mis en réaction en présence de (i).

3. Utilisation d'éléments composites selon la revendication 1 pour la fabrication de composants pour la construction d'automobiles, d'avions et d'immeubles.
